# EUROPÄISCHE PATENTSCHRIFT

(11) **EP 1 985 007 B1**
(45) Veröffentlichungstag und Bekanntmachung des Hinweises auf die Patenterteilung: **02.08.2017**
(21) Anmeldenummer: 07703930.3
(22) Anmeldetag: 17.01.2007
(51) Int. Cl.: H02P 21/13

(54) **VERFAHREN UND VORRICHTUNG ZUM BETREIBEN EINER SYNCHRONMASCHINE**
METHOD AND DEVICE FOR OPERATING A SYNCHRONOUS MACHINE
PROCEDE ET DISPOSITIF DE FONCTIONNEMENT D'UNE MACHINE SYNCHRONE

(30) Priorität: 09.02.2006 DE 102006006032
(43) Veröffentlichungstag der Anmeldung: 29.10.2008
(73) Patentinhaber: Continental Automotive GmbH, 30165 Hannover (DE)
(72) Erfinder: HEXAMER, Bernd, 55566 Meddersheim (DE)
(86) Internationale Anmeldenummer: PCT/EP2007/050428
(87) Internationale Veröffentlichungsnummer: WO 2007/090718

(56) Entgegenhaltungen:
- EP-A- 1 411 629
- EP-A1- 1 303 035
- WO-A-2005/025046
- DE-A1- 10 254 752

## Beschreibung

Die Erfindung betrifft ein Verfahren und eine Vorrichtung zum Betreiben einer Synchronmaschine mit einem Stator, dem drei Wicklungsstränge zugeordnet sind, und einem Rotor. Synchronmaschinen finden Einsatz im Bereich der Automobiltechnik, wo sie beispielsweise für Lenksysteme von Kraftfahrzeuge eingesetzt werden. Synchronmaschinen können mit Permanentmagneten auf dem Rotor ausgestattet sein. Sie können jedoch auch mit Erregerwicklungen in dem Rotor ausgestattet sein. Synchronmaschinen können als Schenkelpolmaschinen ausgebildet sein, bei denen der Rotor ein Polrad hat mit ausgeprägten Polen. Die Synchronmaschine kann jedoch auch als Vollpolmaschine mit einem rotationssymmetrisch ausgebildetem Rotor ausgebildet sein.

Aus dem Fachbuch "Control of Electrical Drives", Leonhard, W. zweite Auflage, Berlin, Heidelberg, New York: Springer-Verlag 1996, Seiten 309 bis 317 ist eine Steuerung für eine Synchronmaschine mit Permanentmagneten bekannt. Die Synchronmaschine wird mittels einer feldorientierten Stromregelung gesteuert. Dazu werden Transformationen der Ströme und Spannungen in ein mit dem Rotor umlaufendes Koordinatensystem, ein d,q-Koordinatensystem, gemacht. Die Transformation wird als Park-Transformation bezeichnet. Regelgrößen sind hierbei die Drehgeschwindigkeit und der Drehwinkel des Rotors.

Bei dem d,q-Koordinatensystem fällt die d-Achse mit der Orientierung der jeweiligen Pole des Rotors zusammen, während die q-Achse senkrecht auf der d-Achse steht. Die d-Achse wird auch als reelle Achse und die q-Achse als imaginäre Achse bezeichnet. Im Falle der Schenkelpolmaschine bildet sich aufgrund des ausgeprägten Pols in der direkten Achse des Polrades der Fluss hauptsächlich dort aus und macht so den Einsatz des d,q-Koordinatensysetems besonders vorteilhaft.

Aus der Veröffentlichung "Field Oriented Control of Three-Phase AC-motors", Texas Instruments, BPRA 073, Texas Instruments Europe, 1998, ist eine feldorientierte Stromregelung für eine Synchronmaschine bekannt. Eine Stromsensorik zum Erfassen der Leitungsströme der Synchronmaschine ist vorgesehen. Die erfassten Leitungsströme werden mittels einer Clarke und Park-Transformation in das mit dem Rotor umlaufende Koordinatensystem, das d,q-Koordinatensystem, transformiert. Die transformierten d-Motorströme und q-Motorströme werden dann jeweils einem Verknüpfungspunkt zum Bilden einer Regeldifferenz mit entsprechenden Sollwerten der d,q-Motorströme zugeführt und dann diese Regeldifferenz jeweils einem PI-Regler zugeführt. Stellsignal des jeweiligen PI-Reglers ist dann eine jeweilige d- beziehungsweise q-Spannung die dann einer inversen Park-Transformation unterworfen wird und einem Raumzeiger-Pulsweitenmodulator zugeführt wird, der auf einen Dreiphasen-Wechselrichter einwirkt zum Erzeugen entsprechender Leitungsströme für die Synchronmaschine.

Aus der EP 1411629 A1 ist es bekannt, zum Betreiben eines Synchronmotors Messwerte von Motorströmen der Synchronmaschine zu erfassen und diese in Istwerte der Motorströme in ein mit dem Rotor umlaufenden Koordinatensystem zu umzuwandeln. Ferner ist ein Strombeobachter vorgesehen, der einen d-Achsen Motorstrom und einen q-Achsen Motorstrom schätzt und zwar auf der Basis des d-Achsen tatsächlichen Motorstroms und des q-Achsen tatsächlichen Motorstroms und abhängig von q-Achsen- und d-Achsen-Sollwerten der elektrischen Spannungen der Synchronmaschine.

Aus der WO 2005/025046 ist ein Verfahren zur Regelung von synchronen Linearmotoren und eine Schaltungsanordnung zur Durchführung des Verfahrens bekannt. Ein zugeordneter Umrichter umfasst ein Modell zur Berechnung der Bestromung für ein Primärteil und eine Strommesseinrichtung. Mittels des Modells werden Istwerte der Ströme in dem Zweiachsensystem abhängig von Messwerten der Ströme in einem Drehstromsystem ermittelt und zwar durch Transformation in das Zweiachsensystem des Primärteils.

Aus der DE 10254752 A1 offenbart zur Fehlererkennung eines bürstenlosen Elektromotors mindestens eine erste Motorkenngröße zu messen oder zu ermitteln und auf der Grundlage der ersten Motorkenngröße eine zweite Schätz-Motorkenngröße zu schätzen. Ferner wird die zweite Schätz-Motorkenngröße mit einer zweiten, gemessenen oder ermittelten Motorkenngröße verglichen und nach Maßgabe des Vergleichs ein Fehler des Elektromotors festgestellt.

Aus der EP 1303035 A1 ist ein System zum Steuern eines Synchronmotors bekannt. Gemessene Stromwerte werden in ein d,q-Koordinatensystem umgewandelt. Diese werden in einem Stromregler als Istwerte zugeführt, dessen Stellgröße Sollwerte für die Spannungen, in dem d,q-Koordinatensystem sind.

Die Aufgabe der Erfindung ist es ein Verfahren und eine Vorrichtung zum Betreiben einer Synchronmaschine zu schaffen, das beziehungsweise die einfach und präzise ist.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren und eine entsprechende Vorrichtung zum Betreiben einer Synchronmaschine mit einem Stator, dem drei Wicklungsstränge zugeordnet sind, und einem Rotor, bei dem Schätzwerte von Motorströmen der Synchronmaschine in einem mit dem Rotor umlaufenden Koordinatensystem mittels eines Beobachters ermittelt werden und zwar abhängig von Sollwerten elektrischer Spannungen der Synchronmaschine in dem mit dem Rotor umlaufenden Koordinatensystem. Das mit dem Rotor umlaufende Koordinatensystem kann auch als d,q-Koordinatensystem bezeichnet werden. Die Erfindung zeichnet sich dadurch aus, dass ein präzises Betreiben der Synchronmaschine auch unter Verzicht auf eine aufwändige Stromsensierung der Leiterströme der Synchronmaschine möglich ist. Dadurch, dass die Berechnungen innerhalb des Beobachters in dem mit dem Rotor umlaufenden Koordinatensystem erfolgen, ist eine sehr recheneffiziente Ermittlung der Schätzwerte der Motorströme möglich.

Es werden Motorinduktivitäten abhängig von Schätzwerten der Motorströme in dem mit dem Rotor umlaufenden Koordinatensystem ermittelt und die Schätzwerte der Motorströme abhängig von den Motorinduktivitäten ermittelt. Auf diese Weise kann einfach eine nichtlineare Abhängigkeit der Motorinduktivitäten von den Motorströmen berücksichtigt werden und somit können die Schätzwerte der Motorströme sehr präzise ermittelt werden.

Gemäß einer vorteilhaften Ausgestaltung wird ein ohmscher Ersatzwiderstand, der maßgeblich ist für den Betrieb der Synchronmaschine, temperaturabhängig ermittelt und die Schätzwerte der Motorströme werden abhängig von dem ohmschen Ersatzwiderstand ermittelt. Auf diese Weise können die Schätzwerte der Motorströme besonders präzise ermittelt werden und zwar auch bei während des Betriebs der Synchronmaschine auftretenden Temperaturschwankungen einzelner Komponenten der Synchronmaschine.

Gemäß einer weiteren vorteilhaften Ausgestaltung wird eine für eine Wicklungstemperatur charakteristische Größe erfasst und der Ersatzwiderstand abhängig von der für die Wicklungstemperatur charakteristischen Größe ermittelt. Die Wicklungstemperatur ist dabei die jeweilige Temperatur der Wicklungen in dem Stator der Synchronmaschine. Auf diese Weise kann dann eine Temperaturabhängigkeit des Widerstands der jeweiligen Wicklungsstränge gut berücksichtigt werden.

Gemäß einer weiteren vorteilhaften Ausgestaltung wird eine für eine Leistungsendstufentemperatur einer Leistungsendstufe, die der Synchronmaschine zum Betreiben zugeordnet ist, charakteristische Größe erfasst und der Ersatzwiderstand abhängig von der für die Leistungsendstufentemperatur charakteristische Größe ermittelt. Dem liegt die Erkenntnis zugrunde, dass der Widerstand der jeweiligen Leistungsendstufe eine starke Temperaturabhängigkeit aufweist, insbesondere beim Einsatz von MOSFET-Transistoren besteht eine starke nichtlineare Temperaturabhängigkeit. Dies trägt dann somit ebenfalls dazu bei die Schätzwerte der Motorströme sehr präzise zu ermitteln.

Gemäß einer weiteren vorteilhaften Ausgestaltung wird der Ersatzwiderstand mit einer geringeren Aktualisierungsrate beim. Betrieb der Synchronmaschine aktualisiert als die Schätzwerte der Motorströme. Auf diese Weise wird die Erkenntnis genutzt, dass die Temperatur keine so große Dynamik aufweist und so Rechenressourcen gespart werden können.

Gemäß einer weiteren vorteilhaften Ausgestaltung wird eine für eine Rotortemperatur charakteristische Größe ermittelt. Ferner wird ein verketteter Fluss abhängig von der für die Rotortemperatur charakteristischen Größe ermittelt und die Schätzwerte der Motorströme abhängig von der für die Rotortemperatur charakteristischen Größe ermittelt. Dem liegt die Erkenntnis zugrunde, dass der verkettete Fluss auch ein stark temperaturabhängiges Verhalten hat, insbesondere wenn der Rotor mit Permanentmagneten ausgestattet ist. Auf diese Weise können so die Schätzwerte der Motorströme besonders präzise während des Betriebs der Synchronmaschine ermittelt werden.

In diesem Zusammenhang ist es vorteilhaft, wenn der verkettete Fluss mit einer geringeren Aktualisierungsrate aktualisiert wird als die Schätzwerte der Motorströme. In diesem Zusammenhang wird ebenfalls die Erkenntnis genutzt, dass die Temperatur keine so große Dynamik aufweist und so Rechenressourcen gespart werden können.

In diesem Zusammenhang ist es ebenfalls vorteilhaft, wenn die Motorinduktivität mit einer geringeren Aktualisierungsrate aktualisiert werden als die Schätzwerte der Motorströme. Auch hier wird die Erkenntnis genutzt, dass die Motorinduktivität im realen Betrieb im Vergleich zu der Aktualisierungsrate der Schätzwerte der Motorströme einer deutlich geringeren Dynamik unterliegt und so Rechenressourcen ohne Einbuße an Präzision bei der Ermittlung der Schätzwerte der Motorströme gespart werden können.

Gemäß einer weiteren vorteilhaften Ausgestaltung wird der Ersatzwiderstand beziehungsweise der verkettete Fluss mit einer geringeren Aktualisierungsrate ermittelt als die Motorinduktivitäten. Dem liegt die Erkenntnis zugrunde, dass der Ersatzwiderstand und der verkettete Fluss einer geringeren Dynamik unterliegt als die Motorinduktivitäten und so die Rechenressourcen sehr gezielt eingesetzt werden können, ohne nennenswerte Einbuße an Präzision beim Ermitteln der Schätzwerte der Motorströme.

Gemäß einer weiteren vorteilhaften Ausgestaltung wird der Ersatzwiderstand beziehungsweise der verkettete Fluss mit einer geringeren Aktualisierungsrate ermittelt als eine Drehgeschwindigkeit des Rotors relativ zu dem Stator. Dem liegt auch die Erkenntnis zugrunde, dass die Drehgeschwindigkeit des Rotors eine höhere Dynamik aufweist als der Ersatzwiderstand beziehungsweise der verkettete Fluss und somit Rechenressourcen gezielt im Sinne von einer möglichst effizienten Berechnung eingesetzt werden können ohne eine nennenswerte Einbuße an Präzision beim Ermitteln der Schätzwerte der Motorströme.

Gemäß einer weiteren vorteilhaften Ausgestaltung werden die Schätzwerte der Motorströme als Istwerte Reglern zugeführt, deren Stellsignale die Sollwerte der elektrischen Spannungen der Synchronmaschine sind in dem mit dem Rotor umlaufenden Koordinatensystem. Auf diese Weise ist eine präzise und dynamische Regelung der Synchronmaschine möglich.

Gemäß einer weiteren vorteilhaften Ausgestaltung werden Messwerte der Motorströme in den Leitern der Synchronmaschine mittels einer Stromsensorik erfasst und in Messwerte der Motorströme in die mit dem Rotor umlaufenden Koordinatensystem transformiert. Ferner werden die Messwerte mit den Schätzwerten plausibilisiert und abhängig von der Plausibilisierung erfolgt eine Diagnoseaussage. Auf diese Weise ist eine einfache Überwachung beim Betreiben der Synchronmaschine möglich und auch eine Redundanz gegeben, die insbesondere im Hinblick auf Sicherheitsaspekte von Vorteil sein kann.

Gemäß einer weiteren vorteilhaften Ausgestaltung umfasst die Diagnoseaussage eine Aussage über einen Ausfall der Stromsensorik. Auf diese Weise kann ohne eine zusätzliche Sensorik so ein Ausfall der Stromsensorik erfasst werden und vorteilhaft Maßnahmen eingeleitet werden.

Gemäß einer weiteren vorteilhaften Ausgestaltung wird nach einem erkannten Ausfall der Stromsensorik die Synchronmaschine in einem Betriebszustand des Notlaufs betrieben und zwar unabhängig von den Messwerten der Motorströme in dem mit dem Rotor umlaufenden Koordinatensystem und dafür abhängig mit den Schätzwerten der Motorströme. Auf diese Weise ist ein sicherer und gleichzeitig komfortabler Notlauf möglich. Insbesondere kann die Synchronmaschine präzise in einen sicheren Zustand gefahren werden und dann gegebenenfalls ausgeschaltet werden.

Gemäß eines weiteren Aspekts zeichnet sich die Erfindung aus durch ein Computerprogrammprodukt umfassend ein computerlesbares Medium, das Programmanweisungen umfasst, die ausführbar sind durch einen Prozessor, um das Verfahren und seine vorteilhaften Ausgestaltungen zum Betreiben der Synchronmaschine auszuführen.

Ausführungsbeispiele der Erfindung sind im Folgenden anhand der schematischen Zeichnungen beispielhaft erläutert.

Es zeigen:

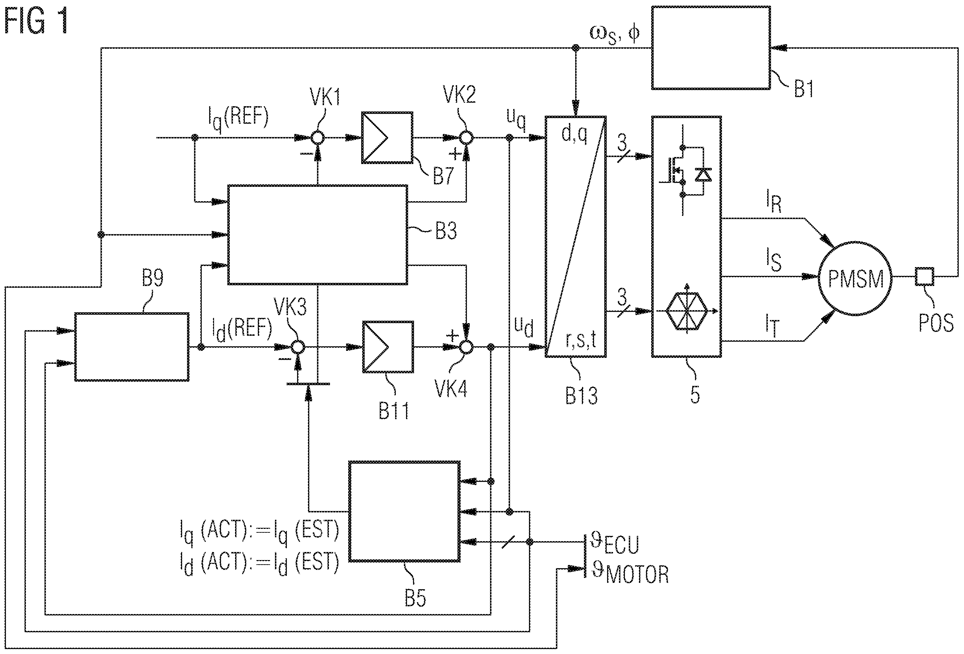

Figur 1 ein erstes Blockschaltbild einer Vorrichtung zum Betreiben einer Synchronmaschine,
Figur 2 eine erste grundsätzliche Ausgestaltung eines Beobachters,
Figur 3 eine konkrete Ausgestaltung des Beobachters gemäß Figur 2,
Figur 4 eine zweite Ausführungsform der Vorrichtung zum Betreiben der Synchronmaschine und
Figur 5 ein Ablaufdiagramm eines Programms, das in einer Diagnoseeinheit während des Betriebs der Synchronmaschine abgearbeitet wird.

Elemente gleicher Konstruktion oder Funktion sind figurenübergreifend mit den gleichen Bezugszeichen gekennzeichnet.

Eine Synchronmaschine PMSM umfasst einen Stator mit drei Wicklungssträngen, die jeweils resultierend um 120 Grad versetzt angeordnet sind. Die Synchronmaschine PMSM umfasst ferner einen Rotor, auf dem Permanentmagnete angeordnet sind. Der Rotor mit den Permanentmagneten kann rotationssymmetrisch (Vollpolläufer) oder mit ausgeprägten Polen (Schenkelpolläufer) ausgebildet sein. Der Stator umfasst ein dreiphasiges symmetrisches Wicklungssystem.

Ein Positionssensor POS ist vorgesehen, mittels dessen ein Winkel des Polrads bezogen auf eine vorgegebene Bezugsmarke auf dem Stator erfasst werden kann. Das Messsignal des Positionssensors ist einem Block B1 zugeführt, der eine Signalverarbeitungseinheit umfasst und aus dem Messsignal des Positionssensors den Drehwinkel Φ und auch eine Drehgeschwindigkeit ωₛ des Rotors relativ zu dem Stator berechnet. Der Positionsgeber kann beispielsweise als Resolver ausgebildet sein er kann jedoch auch beispielsweise ein inkrementeller Positionsgeber umfassend ein Hallelement oder dergleichen sein.

Ein Block B3 ist vorgesehen, der eine Vorsteuerung umfasst und dem eingangsseitig die Drehgeschwindigkeit ωₛ des Rotors relativ zu dem Stator, der Drehwinkel Φ des Rotors relativ zu dem Stator und ein Sollwert iq(REF) eines q-Motorstroms und ein Sollwert i_{d}(REF) des d-Motorstroms zugeführt sind und der dazu ausgebildet ist Vorsteuerwerte zu ermitteln.

Unter d- beziehungsweise q-Motorstrom werden Motorströme in einem mit dem Rotor umlaufenden Koordinatensystem, das als d,q-Koordinatensystem bezeichnet ist, verstanden.

Der Sollwert i_{q}(REF) des q-Motorstroms ist bevorzugt von einer anderen Funktionseinheit im Sinne eines Einstellens eines gewünschten Drehmoments der Synchronmaschine PMSM vorgegeben.

Ein Block B5 umfasst einen Beobachter, der dazu ausgebildet ist Schätzwerte i_{q}(EST), i_{d}(EST) von Motorströmen der Synchronmaschine PMSM in einem mit dem Rotor umlaufenden Koordinatensystems zu ermitteln. Dies erfolgt bevorzugt abhängig von Sollwerten u_{d} einer d-Spannung, Sollwerten u_{q} einer q-Spannung, einer Leistungsendstufentemperatur *ϑ_{ECU}*, einer Wicklungstemperatur *ϑ_{MOTOR}* und der vorher bestimmten Schätzwerte iq(EST), i_{d}(EST) des q-Motorstroms beziehungsweise des d-Motorstroms.

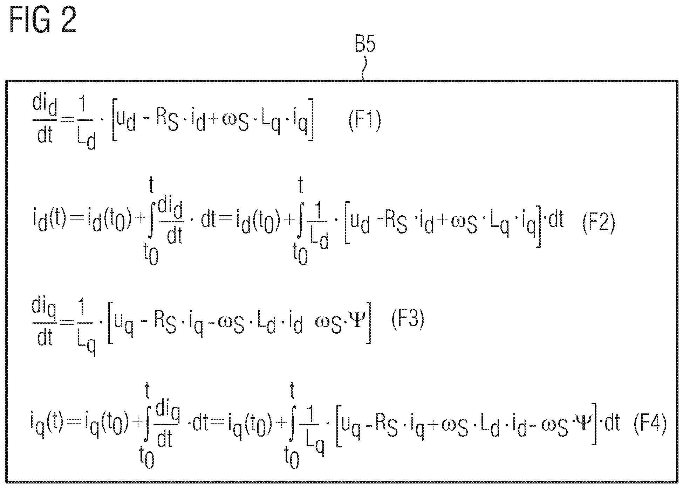

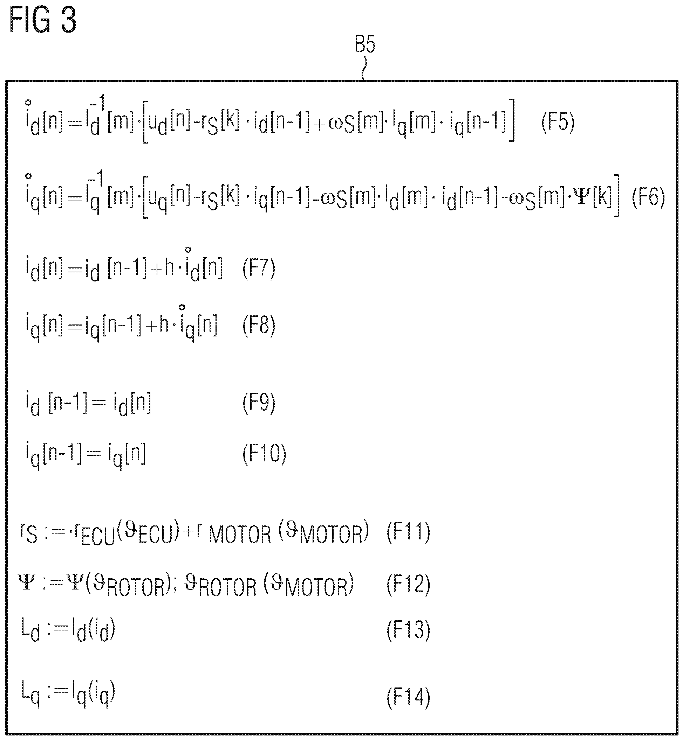

Die genauere Ausgestaltung des Beobachters ist weiter unten anhand der Blockschaltbilder der Figuren 2 und 3 näher erläutert.

Ein Verknüpfungspunkt VK1 ist vorgesehen, in dem eine Differenz zwischen dem Sollwert i_{q}(REF) des q-Motorstroms und des einen Istwert i_{q}(ACT) bildenden Schätzwertes i_{q}(EST) des q-Motorstroms, wobei diese Differenz dann als Regeldifferenz einem Block B7 zugeführt ist, der einen q-Regler umfasst. Der q-Regler kann beispielsweise als PI-Regler ausgebildet sein. Ausgangsseitig erzeugt der q-Regler einen entsprechenden Reglerwert, der dann in einem Verknüpfungspunkt VK2 mit einem entsprechenden Vorsteuerwert der Vorsteuerung des Blocks B3 zu dem Sollwert u_{q} der q-Spannung verknüpft wird.

Ein Bock B9 ist vorgesehen, der eine Feldschwächung umfasst und dem eingangsseitig die aktuelle Versorgungsspannung des Stellglieds S und die Sollwerte u_{d}, u_{q} der d-Spannung und der q-Spannung zugeführt werden. Die Ausgangsgröße des Blocks B9 ist der Sollwert i_{d}(REF) des d-Motorstroms.

In einem Verknüpfungspunkt VK3 wird eine Differenz zwischen dem Sollwert i_{d}(REF) des d-Motorstroms und eines Istwertes i_{d}(ACT) des d-Motorstroms als eine Regeldifferenz für einen d-Regler eines Blocks B11 ermittelt. Dem Istwert i_{d}(ACT) des d-Motorstroms wird der Schätzwert i_{d}(EST) des d-Motorstroms zugeordnet.

Der d-Regler ist beispielsweise ebenso als PI-Regler ausgebildet, kann jedoch ebenso wie der q-Regler auch als ein anderer dem Fachmann für diesen Zweck als geeignet bekannter Regler ausgebildet sein.

Ausgangsseitig erzeugt der d-Regler einen entsprechenden Reglerwert, der in einem Verknüpfungspunkt VK4 mit einem entsprechenden Vorsteuerwert der Vorsteuerung zu dem Sollwert u_{d} der d-Spannung verknüpft wird.

Ein Block B13 umfasst einen (d,q)/(r,s,t) Transformationsblock, der ausgebildet ist zum Durchführen einer inversen Park- und Clarke-Transformation und so eine entsprechende Transformation von dem q,d-Koordinatensystem in entsprechende r,s,t-Koordinaten durchführt und so zur Vorgabe korrespondierender Leiterspannungen der Synchronmaschine dient. Das d,q-Koordinatensystem zeichnet sich dadurch aus, dass die entsprechenden transformierten Motorströme und Spannungen bei Kenntnis der exakten Drehwinkel Φ bei einem stationären Betrieb der Synchronmaschine zeitinvariant sind.

Ein Stellglied S hat als Eingangsgrößen die Ausgangsgrößen des Blockes B13. Das Stellglied umfasst bevorzugt einen Raumzeiger-Pulsweitenmodulator, der entsprechende pulsweitenmodulierte Stellsignale für einen ebenfalls in dem Stellglied ausgebildeten Dreiphasen-Wechselrichter erzeugt. Der Dreiphasen-Wechselrichter versorgt dann die Synchronmaschine mit den gewünschten Phasenspannungen.

Der Beobachter B5 (Figur 2) ist dazu ausgebildet Differenzialgleichungen F1 bis F4 und insbesondere F2 und F4 zu lösen und Schätzwerte i_{d}(EST) und i_{q}(EST) der Motorströme in dem d,q-Koordinatensystem zu ermitteln. Die Differenzialgleichungen F1 bis F4 sind in allgemeiner Form ohne den Bezug auf "(EST)" bezüglich der Motorströme angegeben. t₀ bezeichnet einen Startzeitpunkt der entsprechend notwendigen Integration. In den Differenzialgleichungen F1 bis F4 sind ein ohmscher Ersatzwiderstand Rₛ, eine d-Motorinduktivität L_{d} eine q-Motorinduktivität L_{q} mit Großbuchstaben bezeichnet. Sie sind dann entsprechend mit Kleinbuchstaben rₛ, l_{d}, l_{q} bezeichnet, wenn sie jeweils in vorgebbaren Abtastintervallen neu ermittelt werden.

Figur 3 zeigt eine bevorzugte Implementierung der Differenzialgleichungen F2 und F4 in dem Block B5 und zwar in Form entsprechender Differenzengleichungen, die beispielsweise durch Differenzengleichungen F5, F6 vorgegeben sind. Durch den jeweiligen Term in eckigen Klammern sind jeweils die Zeitpunkte der Aktualisierung der jeweiligen Werte repräsentiert. n wird in diesem Zusammenhang eingesetzt für eine höchste Aktualisierungsrate, die beispielsweise in etwa 100 Mikrosekunden betragen kann. m repräsentiert eine mittlere Aktualisierungsrate die beispielsweise in etwa 1 Millisekunden betragen kann und k repräsentiert eine geringere Aktualisierungsrate, die beispielsweise 10 bis 100 Millisekunden kann. So bezeichnet i_{d} [n] den jeweils aktuellen Wert des jeweiligen q-Motorstroms während i_{d} [n-1] den bei der letzten Abtastung oder Ermittlung ermittelten entsprechenden d-Motorstrom bezeichnet. Durch das Vorsehen der unterschiedlichen Abtastraten können Rechenressourcen gezielt eingesetzt werden und somit insgesamt Rechnerressourcen gespart werden ohne wesentliche Einbuße an Präzision beim Ermitteln der Schätzwerte i_{d}(EST) und i_{q}(EST) der d,q-Motorströme.

Bevorzugt werden die Differenzengleichungen F5 und F6 gelöst mittels eines entsprechenden Differenzengleichungslösers, insbesondere unter Zuhilfenahme des Euler Verfahrens erster Ordnung, wie dies anhand der Gleichungen F7 und F8 repräsentiert ist. Ein Faktor h ist repräsentativ für eine Integrationsschrittweite und entspricht insbesondere einer Verarbeitungszeitdauer und ist identisch mit der Aktualisierungsrate n.

Nach der jeweils zyklisch folgenden Lösung der Differenzengleichungen F5 und F6 mittels der Gleichungen F7 und F8 erfolgt dann ein entsprechendes Aktualisieren der d-Motorströme und q-Motorströme entsprechend der Beziehungen F9 und F10.

Der ohmsche Ersatzwiderstand rₛ kann fest vorgegeben sein. Bevorzugt wird er jedoch entsprechend einer Beziehung F11 ermittelt. Die Leistungsendstufentemperatur *ϑ_{ECU}* kann beispielsweise innerhalb des Stellgliedes S, das die Leistungsendstufen umfasst, mittels eines geeigneten Temperatursensors erfasst werden oder auch mittels eines weiteren Beobachters gegebenenfalls geschätzt werden. Die Wicklungstemperatur *ϑ_{MOTOR}* wird mittels eines geeignet angeordneten Temperatursensors ermittelt. Bevorzugt sind dann zum Ermitteln von Endstufenwiderständen r_{ecu} und Wicklungswiderständen r_{MOTOR} Kennlinien in der Vorrichtung zum Betreiben der Synchronmaschine gespeichert, die vorab durch Versuche oder Simulationen ermittelt worden sind. Zusätzlich oder alternativ kann das Ermitteln auch auf eine andere Art und Weise rechnerisch erfolgen.

Ein verketteter Fluss Ψ wird bevorzugt abhängig von einer Rotortemperatur *ϑ_{ROTOR}* ebenfalls mittels einer geeignet vorgesehenen Kennlinie ermittelt (siehe F12). Bevorzugt wird die Rotortemperatur *ϑ_{ROTOR}* abhängig von der Wicklungstemperatur *ϑ_{MOTOR}* mittels eines entsprechenden Modells, das den Zusammenhang zwischen den beiden Größen abbildet, ermittelt. Das Modell ist bevorzugt ebenso vorab durch entsprechende Versuche oder Simulationen ermittelt.

Die d-Motorinduktivität l_{d} und die q-Motorinduktivität l_{q} werden bevorzugt abhängig von den aktuellen Schätzwerten i_{d}(EST), i_{q}(EST) des d,q-Motorstroms und zwar entsprechend der mittleren Abtastrate bestimmt(siehe F13, F14). In der Vorsteuervorrichtung können die Motorinduktivitäten auch abhängig von den Sollwerten i_{d}(REF), i_{q}(REF) des d,q-Motorstroms bestimmt werden.

Alternativ können auch alle Größen der Differenzengleichungen F5, F6 und der Rechenvorschriften F7 bis F10 mit der gleichen Abtastrate jeweils neu berechnet werden.

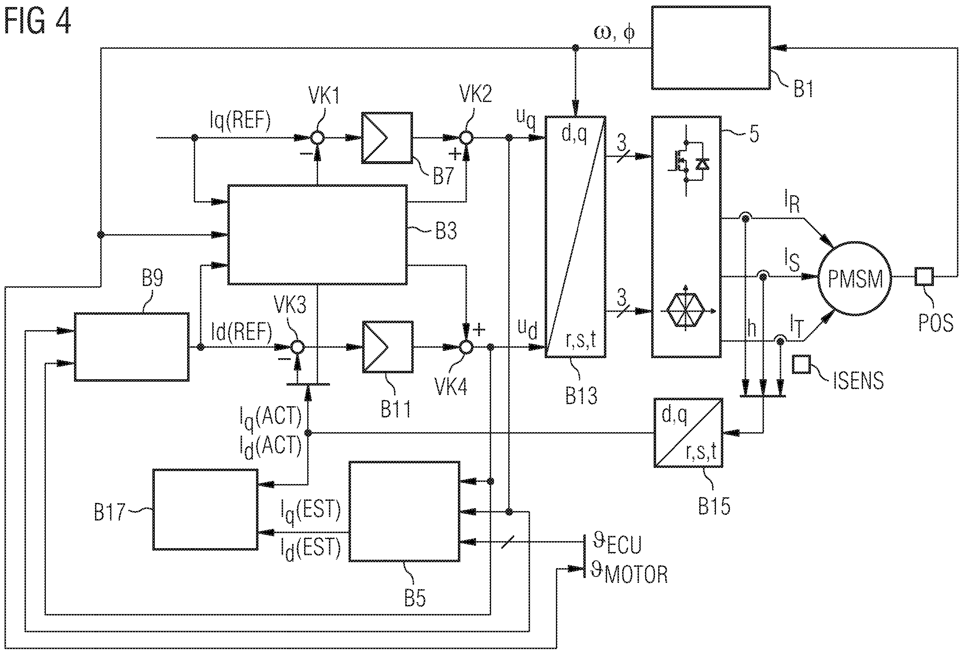

Die zweite Ausführungsform der Vorrichtung zum Betreiben der Synchronmaschine PMSM ist anhand der Figur 4 dargestellt. Sie unterscheidet sich von der ersten Ausführungsform gemäß Figur 4 dadurch, dass eine Stromsensorik ISENS vorgesehen ist, die Messwerte der Leitungsströme der Synchronmaschine PMSM erfasst und einem Block B15 zuführt, der einen (r,s,t)/(d,q)-Transformationsblock umfasst, mittels dessen diese dann in Istwerte i_{d}(ACT) des d-Motorstroms und in Istwerte i_{q}(ACT) des q-Motorstroms transformiert werden.

Ferner ist ein Block B17 vorgesehen, der eine Diagnoseeinheit umfasst. Die Diagnoseeinheit ist dazu ausgebildet die Istwerte i_{d}(ACT), i_{q}(ACT) des d- beziehungsweise q-Motorstroms mit den Schätzwerten i_{d}(EST), i_{q}(EST) des d- beziehungsweise q-Motorstroms zu plausibilisieren und daraus eine Diagnoseaussage abzuleiten.

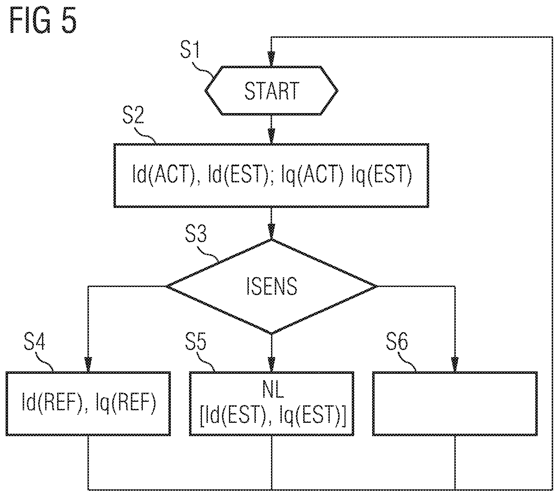

Zum Ableiten der Diagnoseaussage wird in dem Block B17 ein Programm abgearbeitet, das im Folgenden anhand des Ablaufdiagramms der Figur 5 näher erläutert ist. Das Programm wird in einem Schritt S1 gestartet, in dem gegebenenfalls Variablen initialisiert werden.

In einem Schritt S2 erfolgt das Plausibilisieren des Istwertes i_{d}(ACT) mit dem Istwert i_{d}(EST) des d-Motorstroms und/oder des Istwertes i_{q}(ACT) und des Schätzwertes iq(EST) des q-Motorstroms. Abhängig von dem Ergebnis der Plausibilisierung in dem Schritt S2 wird in dem Schritt S3 eine Entscheidung bezüglich einer Diagnoseaussage getroffen. So wird beispielsweise in dem Schritt S3 bei einer gegebenenfalls unplausiblen Abweichung der Vergleiche der entsprechenden Ist- und Schätzwerte i_{d}(ACT), i_{q}(ACT), i_{d}(EST), i_{q}(EST) auf einen Ausfall der Stromsensorik erkannt. In diesem Fall kann beispielsweise in einen Schritt S5 verzweigt werden, in dem die Synchronmaschine PMSM in einem Betriebszustand des Notlaufs gesteuert wird. In diesem Betriebszustand wird bevorzugt die Synchronmaschine PMSM bezüglich der Regelung in den Blöcken B7 und B11 mit den Schätzwerten i_{q}(EST) beziehungsweise i_{d}(EST) des q- beziehungsweise d-Motorstroms beaufschlagt und bevorzugt in einen sicheren Zustand gefahren, und dann ausgeschaltet. Sie kann jedoch auch dann für eine längere Zeit entsprechend betrieben werden.

Darüber hinaus kann je nach Ergebnis der Plausibilisierung in dem Schritt S2 auch in einem Schritt S3 die Entscheidung zum Verzweigen in einen Schritt S4 getroffen werden, in dem dann der Sollwert i_{d}(REF) und/oder der Sollwert i_{q}(REF) gegebenenfalls abhängig von den Abweichungen der Schätz- und Istwerte i_{d}(EST), i_{d}(ACT) der d-Motorströme beziehungsweise der Abweichung der Schätz- und Istwerte i_{q}(EST), i_{q}(ACT) angepasst werden. Diesbezüglich kann so ein Modellfehler im Hinblick auf ein Temperaturverhalten einzelner Komponenten der Synchronmaschine PMSM oder des Stellgliedes S korrigiert werden. Alternativ kann auch in einen Schritt S6 verzweigt werden, in dem weitere Diagnoseaussagen erfolgen oder auch keine Diagnoseaussage erfolgen kann.

Die Synchronmaschine PMSM kann auch statt einer Schenkelpolmaschine beispielsweise eine Vollpolmaschine sein und sie kann grundsätzlich auch statt dem Permanentmagneten auf dem Polrad Erregerwicklungen umfassen.

Die Funktionalität der Blöcke B1 bis B15 einschließlich der Verknüpfungspunkte VK1 bis VK4 oder einer Untermenge dieser kann auch zum Teil oder auch ganz in Form von Software oder Hardware oder einer Kombination davon ausgebildet sein. Ein dazu korrespondierendes Computerprogrammprodukt kann vorgesehen sein auf einem computerlesbaren Medium mit Programmanweisungen, die durch einen Computer ausführbar sind und die ausgebildet sind zum Betreiben der Synchronmaschine. Das computerlesbare Medium kann zum Beispiel sein, eine CD-ROM, eine DVD, eine Flash-Memory-Karte, eine Festplatte oder irgendein anderes geeignetes computerlesbares Medium zum Beispiel ein Speichermedium in einem Computernetz.

## Patentansprüche

1. Verfahren zum Betreiben einer Synchronmaschine (PMSM) mit einem Stator, dem drei Wicklungsstränge zugeordnet sind, und einem Rotor bei dem Schätzwerte (i_{d}(EST), i_{q}(EST)) von Motorströmen der Synchronmaschine (PMSM) in einem mit dem Rotor umlaufenden Koordinatensystem mittels eines Beobachters ermittelt werden und zwar abhängig von Sollwerten (u_{d}, u_{q}) elektrischer Spannungen der Synchronmaschine (PMSM) in den mit dem rotorumlaufenden Koordinatensystem und abhängig von Motorinduktivitäten (l_{d}, l_{q}), wobei die Motorinduktivitäten (l_{d}, l_{q}) abhängig von den Schätzwerten (i_{q}(EST), i_{d}(EST)) der Motorströme ermittelt werden.

2. Verfahren nach Anspruch 1, bei dem ein ohmscher Ersatzwiderstand (rₛ) temperaturabhängig ermittelt wird und die Schätzwerte (i_{d}(EST), i_{q}(EST)) der Motorströme abhängig von dem ohmschen Ersatzwiderstand (rₛ) ermittelt werden.

3. Verfahren nach Anspruch 2, bei dem eine für eine Wicklungstemperatur (*ϑ_{MOTOR}*) charakteristische Größe erfasst und der Ersatzwiderstand (rₛ) abhängig von der für die Wicklungstemperatur (*ϑ_{MOTOR}*) charakteristischen Größe ermittelt wird.

4. Verfahren nach Anspruch 2 oder 3, bei dem eine für eine Leistungsendstufentemperatur (*ϑ_{UCE}*) einer Leistungsendstufe, die der Synchronmaschine (PMSM) zum Betreiben zugeordnet ist, charakteristische Größe erfasst wird und der Ersatzwiderstand (rₛ) abhängig von der für die Leistungsendstufentemperatur (*ϑ_{ECU}*) charakteristischen Größe ermittelt wird.

5. Verfahren nach einem der Ansprüche 2 bis 4, bei dem der Ersatzwiderstand (rₛ) mit einer geringeren Aktualisierungsrate aktualisiert wird als die Schätzwerte (i_{d}(EST), i_{q}(EST)) der Motorströme.

6. Verfahren nach einem der vorstehenden Ansprüche, bei dem eine für eine Rotortemperatur (*ϑ_{ROTOR}*) charakteristische Größe ermittelt wird, ein verketteter Fluss (Ψ) abhängig von der für die Rotortemperatur (*ϑ_{ROTOR}*) charakteristischen Größe ermittelt wird und mindestens einer der Schätzwerte (i_{d}(EST), i_{q}(EST)) der Motorströme abhängig von der für die Rotortemperatur (*ϑ_{ROTOR}*) charakteristischen Größe ermittelt wird.

7. Verfahren nach Anspruch 6, bei dem der verkettete Fluss (Ψ) mit einer geringeren Aktualisierungsrate aktualisiert wird als die Schätzwerte (i_{d}(EST), i_{q}(EST)) der Motorströme.

8. Verfahren nach einem der vorstehenden Ansprüche, bei dem die Motorinduktivitäten (l_{d}, l_{q}) mit einer geringeren Aktualisierungsrate aktualisiert werden als die Schätzwerte (i_{d}(EST), i_{q}(EST)) der Motorströme.

9. Verfahren nach einem der vorstehenden Ansprüche, bei dem der Ersatzwiderstand (rₛ) beziehungsweise der verkettete Fluss (Ψ) mit einer geringeren Aktualisierungsrate ermittelt werden als die Motorinduktivitäten (l_{d}, l_{q}).

10. Verfahren nach einem der Ansprüche 2 bis 9, bei dem der Ersatzwiderstand (rₛ) beziehungsweise der verkettete Fluss (Ψ) mit einer geringeren Aktualisierungsrate ermittelt werden als eine Drehgeschwindigkeit (ωₛ) des Rotors relativ zu dem Stator.

11. Verfahren nach einem der vorstehenden Ansprüche, bei dem die Schätzwerte (i_{d}(EST), i_{q}(EST)) der Motorströme als Istwerte (i_{d}(ACT), i_{q}(ACT)) Reglern zugeführt werden, deren Stellsignale die Sollwerte (u_{d}, u_{q}) der elektrischen Spannungen der Synchronmaschinen (PMSM) sind in dem mit dem Rotor umlaufenden Koordinatensystem.

12. Verfahren nach einem der vorstehenden Ansprüche, bei dem
- Messwerte der Motorströme in den Leitern der Synchronmaschine (PMSM) mittels einer Stromsensorik (ISENS) erfasst werden, in Messwerte der Motorströme in dem mit dem Rotor umlaufenden Koordinatensystem transformiert werden,
- die Messwerte in dem mit dem Rotor umlaufenden Koordinatensystem mit den Schätzwerten plausibilisiert werden und
- abhängig von der Plausibilisierung eine Diagnoseaussage erfolgt.

13. Verfahren nach Anspruch 12, bei dem die Diagnoseaussage eine Aussage über einen Ausfall der Stromsensorik (ISENS) umfasst.

14. Verfahren nach Anspruch 13, bei dem nach einem erkannten Ausfall der Stromsensorik (ISENS) die Synchronmaschine (PMSM) in einem Betriebszustand des Notlaufs (NL) betrieben wird und zwar unabhängig von den Messwerten der Motorströme in dem mit dem Rotor umlaufenden Koordinatensystem und dafür abhängig von den Schätzwerten (i_{d}(EST), i_{q}(EST)) der Motorströme.

15. Vorrichtung zum Betreiben einer Synchronmaschine, mit einem Stator, dem drei Wicklungsstränge zugeordnet sind, und einem Rotor, wobei die Vorrichtung ausgebildet ist zum Ermitteln von Schätzwerten (i_{d}(EST), i_{q}(EST)) von Motorströmen der Synchronmaschine (PMSM) in einem mit dem Rotor umlaufenden Koordinatensystem mittels eines Beobachters und zwar abhängig von Sollwerten (u_{d}, u_{q}) elektrischer Spannungen der Synchronmaschine (PMSM) in dem mit dem Rotor umlaufenden Koordinatensystem und abhängig von Motorinduktivitäten (l_{d}, l_{q}), und die Vorrichtung ferner ausgebildet ist zum Ermitteln der Motorinduktivitäten (l_{d}, l_{q}) abhängig von den Schätzwerten (i_{q}(EST), i_{d}(EST)) der Motorströme.

16. Computerprogrammprodukt, das ein computerlesbares Medium mit Programmanweisungen umfasst, die durch einen Computer ausführbar sind und die ausgebildet sind zum Betreiben einer Synchronmaschine gemäß einem Verfahren nach einem der Ansprüche 1 bis 14.

## Claims

1. Method for operating a synchronous machine (PMSM) having a stator to which three winding phases are assigned, and a rotor in which estimated values (i_{d}(EST), i_{q}(EST)) of motor currents of the synchronous machine (PMSM) are determined in a coordinate system, rotating with the rotor, by means of an observer, to be precise as a function of setpoint values (u_{d}, u_{q}) of electrical voltages of the synchronous machine (PMSM) in the coordinate system which rotates with the rotor, and as a function of motor inductances (l_{d}, l_{q}), wherein the motor inductances (l_{d}, l_{q}) are determined as a function of the estimated values (i_{q}(EST), i_{d}(EST)) of the motor currents.

2. Method according to Claim 1, in which an ohmic equivalent resistance (rₛ) is determined as a function of the temperature, and the estimated values (i_{d}(EST), iq(EST)) of the motor currents are determined as a function of the ohmic equivalent resistance (rₛ).

3. Method according to Claim 2, in which a variable which is characteristic of a winding temperature (*ϑ_{MOTOR}*) is acquired, and the equivalent resistance (rₛ) is determined as a function of the variable which is characteristic of the winding temperature (*ϑ_{MOTOR}*)*.*

4. Method according to Claim 2 or 3, in which a variable which is characteristic of a power output stage temperature (*ϑ_{ECU}*) of a power output stage which is assigned to the synchronous machine (PMSM) for the purpose of operation is acquired, and the equivalent resistance (rₛ) is determined as a function of the variable which is characteristic of the power output stage temperature *(ϑ_{ECU}).*

5. Method according to one of Claims 2 to 4, in which the equivalent resistance (rₛ) is updated with a lower updating rate than the estimated values (i_{d}(EST), i_{q}(EST)) of the motor currents.

6. Method according to one of the preceding claims, in which a variable which is characteristic of a rotor temperature *(ϑ_{ROTOR})* is determined, a linked flux (ψ) is determined as a function of the variable which is characteristic of the rotor temperature *(ϑ_{ROTOR}),* and at least one of the estimated values (i_{d} (EST), i_{q}(EST)) of the motor currents is determined as a function of the variable which is characteristic of the rotor temperature *(ϑ_{ROTOR}).*

7. Method according to Claim 6, in which the linked flux (ψ) is updated with a lower updating rate than the estimated values (i_{d}(EST), i_{q}(EST)) of the motor currents.

8. Method according to one of the preceding claims, in which the motor inductances (l_{d}, l_{q}) are updated with a lower updating rate than the estimated values (i_{d}(EST), i_{q}(EST)), of the motor currents.

9. Method according to one of the preceding claims, in which the equivalent resistance (rₛ) or the linked flux (ψ) is determined with a lower updating rate than the motor inductances (l_{d}, l_{q}).

10. Method according to one of Claims 2 to 9, in which the equivalent resistance (rₛ) or the linked flux (ψ) is determined with a lower updating rate than a rotational speed (ωₛ) of the rotor in relation to the stator.

11. Method according to one of the preceding claims, in which the estimated values (i_{d}(EST), i_{q}(EST)) of the motor currents are fed as actual values (i_{d}(ACT), i_{q}(ACT)) to regulators whose actuation signals are the setpoint values (u_{d}, u_{q}) of the electrical voltages of the synchronous machines (PMSM) in the coordinate system which rotates with the rotor.

12. Method according to one of the preceding claims, in which
- measured values of the motor currents are acquired in the conductors of the synchronous machine (PMSM) by means of a current sensor system (ISENS), are transformed into measured values of the motor currents in the coordinate system which rotates with the rotor,
- plausibility of the measured values in the coordinate system which rotates with the rotor is checked with the estimated values, and
- a diagnostic conclusion is drawn as a function of the plausibility check.

13. Method according to Claim 12, in which the diagnostic conclusion comprises a conclusion about a failure of the current sensor system (ISENS).

14. Method according to Claim 13, in which, after a failure of the current sensor system (ISENS) has been detected, the synchronous machine (PMSM) is operated in an emergency operating state (NL), specifically independently of the measured values of the motor currents in the coordinate system which rotates with the rotor, and, in return, as a function of the estimated values (i_{d}(EST), i_{q}(EST)) of the motor currents.

15. Device for operating a synchronous machine, having a stator to which three winding phases are assigned, and a rotor, wherein the device is designed to determine estimated values (i_{d}(EST), i_{q}(EST)) of motor currents of the synchronous machine (PMSM) in a coordinate system which rotates with the rotor, by means of an observer, specifically as a function of setpoint values (u_{d}, u_{q}) of electrical voltages of the synchronous machine (PMSM) in the coordinate system which rotates with the rotor, and as a function of motor inductances (l_{d}, l_{q}) and the device is also designed to determine the motor inductances (l_{d}, l_{q}) as a function of the estimated values (iq(EST), i_{d}(EST)) of the motor currents.

16. Computer program product which comprises a computer-readable medium with program instructions which can be executed by a computer and which are designed for operating a synchronous machine according to a method according to one of Claims 1 to 14.

## Revendications

1. Procédé de mise en fonctionnement d'une machine synchrone (PMSM) comportant un stator auquel sont associés trois spires, et un rotor, dans lequel des valeurs d'estimation (i_{d}(EST), i_{q}(EST)) de courants de moteur de la machine synchrone (PMSM) sont déterminées dans un système de coordonnées évoluant avec le rotor au moyen d'un observateur, en fonction de valeurs nominales (u_{d}, u_{q}) de tensions électriques de la machine synchrone (PMSM) dans le système de coordonnées évoluant avec le rotor et en fonction d'inductances de moteur (l_{d}, l_{q}), dans lequel les inductances de moteur (l_{d}, l_{q}) sont déterminées en fonction des valeurs d'estimation (i_{q}(EST), i_{d}(EST)) des courants de moteur.

2. Procédé selon la revendication 1, dans lequel une résistance ohmique équivalente (rₛ) est déterminée en fonction de la température et les valeurs d'estimation (i_{d}(EST), i_{q}(EST)) des courants de moteur sont déterminées en fonction de la résistance ohmique équivalente (rₛ).

3. Procédé selon la revendication 2, dans lequel une grandeur caractéristique pour une température d'enroulement (*ϑ_{MOTOR}*) est détectée et la résistance équivalente (rₛ) est déterminée en fonction de la grandeur caractéristique pour la température d'enroulement (*ϑ_{MOTOR}*)*.*

4. Procédé selon la revendication 2 ou 3, dans lequel une grandeur caractéristique pour une température d'étage de puissance (*ϑ_{ECU}*) d'un étage de puissance qui est associé à la machine synchrone (PMSM) pour son fonctionnement, est détectée, et la résistance équivalente (rₛ) est déterminée en fonction de la grandeur caractéristique pour la température d'étage de puissance (*ϑ_{ECU}*)*.*

5. Procédé selon l'une quelconque des revendications 2 à 4, dans lequel la résistance équivalente (rₛ) est actualisée avec une fréquence d'actualisation inférieure aux valeurs d'estimation (i_{d}(EST), i_{q}(EST)) des courants de moteur.

6. Procédé selon l'une quelconque des revendications précédentes, dans lequel une grandeur caractéristique pour une température du rotor (*ϑ_{ROTOR}*) est déterminée, un flux chaîné (**Ψ**) est déterminé en fonction de la grandeur caractéristique pour la température de rotor (*ϑ_{ROTOR}*) et au moins l'une des valeurs d'estimation (i_{d}(EST), i_{q}(EST)) des courants de moteur est déterminée en fonction de la grandeur caractéristique pour la température de rotor (*ϑ_{ROTOR}*).

7. Procédé selon la revendication 6, dans lequel le flux chaîné (Ψ) est actualisé avec une plus faible fréquence d'actualisation que les valeurs d'estimation (i_{d}(EST), i_{q}(EST)) des courants de moteur.

8. Procédé selon l'une quelconque des revendications précédentes, dans lequel les inductances de moteur (l_{d}, l_{q}) sont actualisées avec une plus faible fréquence d'actualisation que les valeurs d'estimation (i_{d}(EST), i_{q}(EST)) des courants de moteur.

9. Procédé selon l'une quelconque des revendications précédentes, dans lequel la résistance équivalente (rₛ) et le flux chaîné (Ψ) sont respectivement déterminés avec une plus faible fréquence d'actualisation que les inductances de moteur (l_{d}, l_{q}).

10. Procédé selon l'une quelconque des revendications 2 à 9, dans lequel la résistance équivalente (rₛ) et le flux chaîné (Ψ) sont respectivement déterminés avec une plus faible fréquence d'actualisation qu'une vitesse de rotation (ωₛ) du rotor par rapport au stator.

11. Procédé selon l'une quelconque des revendications précédentes, dans lequel les valeurs d'estimation (i_{d}(EST), i_{q}(EST)) des courants de moteur sont fournies en tant que valeurs réelles (i_{d}(ACT), i_{q}(ACT)) à des régulateurs dont les signaux de réglage sont les valeurs nominales (u_{d}, u_{q}) des tensions électriques des machines synchrones (PMSM) dans le système de coordonnées évoluant avec le rotor.

12. Procédé selon l'une quelconque des revendications précédentes, dans lequel
- des valeurs de mesure des courants de moteur sont détectées dans les conducteurs de la machine synchrone (PMSM) au moyen de capteurs de courant (ISENS) et sont transformées en valeurs de mesure des courants de moteur dans le système de coordonnées évoluant avec le rotor,
- les valeurs de mesure sont soumises à un test de plausibilité dans le système de coordonnées évoluant avec le rotor en utilisant les valeurs d'estimation, et
- un diagnostic est effectué en fonction du test de plausibilité.

13. Procédé selon la revendication 12, dans lequel le diagnostic comprend un avis concernant les capteurs de courant (ISENS).

14. Procédé selon la revendication 13, dans lequel la machine synchrone (PMSM) est mise en fonctionnement dans un état de fonctionnement de secours (NL) après la détection d'un défaut des capteurs de courant (ISENS) et en fonction de valeurs de mesure des courants de moteur dans le système de coordonnées évoluant avec le rotor et par conséquent en fonction des valeurs d'estimation (i_{d}(EST), i_{q}(EST)) des courants de moteur.

15. Dispositif de mise en fonctionnement d'une machine synchrone comportant un stator auquel sont associés trois spires, et un rotor, dans lequel le dispositif est conçu pour déterminer des valeurs d'estimation (i_{d}(EST), i_{q}(EST)) de courants de moteur de la machine synchrone (PMSM) dans un système de coordonnées évoluant avec le rotor au moyen d'un observateur, en fonction de valeurs nominales (u_{d}, u_{q}) de tensions électriques de la machine synchrone (PMSM) dans le système de coordonnées évoluant avec le rotor et en fonction d'inductances de moteur (l_{d}, l_{q}), et le dispositif est en outre conçu pour déterminer les inductances de moteur (l_{d}, l_{q}) en fonction des valeurs d'estimation (i_{q}(EST), i_{d}(EST)) des courants de moteur.

16. Produit de programme d'ordinateur comprenant un support lisible par ordinateur portant des instructions de programme pouvant être exécutées par un ordinateur et conçues pour mettre en fonctionnement une machine synchrone conformément à un procédé selon l'une quelconque des revendications 1 à 14.
